Europäisches Patentamt

European Patent Office

Office européen des brevets

(19)

(11) Veröffentlichungsnummer : **0 185 969**
**B1**

# (12) EUROPÄISCHE PATENTSCHRIFT

(45) Veröffentlichungstag der Patentschrift :
**13.04.88**

(21) Anmeldenummer : **85115236.3**

(22) Anmeldetag : **30.11.85**

(51) Int. Cl.⁴ : **A 47 J 37/10**

(54) **Auf ein Kochgefäss auflegbares, zum Filtern der hochsteigenden Dämpfe od. dgl. zu verwendendes Gerät.**

(30) Priorität : **13.12.84 DE 8436507 U**

(43) Veröffentlichungstag der Anmeldung :
**02.07.86 Patentblatt 86/27**

(45) Bekanntmachung des Hinweises auf die Patenterteilung : **13.04.88 Patentblatt 88/15**

(84) Benannte Vertragsstaaten :
**AT BE CH DE FR GB IT LI LU NL SE**

(56) Entgegenhaltungen :
**EP-A- 0 039 754**
**FR-A- 1 145 517**
**US-A- 1 622 351**
**US-A- 2 587 773**
**US-A- 3 528 236**

(73) Patentinhaber : **Fichter, Karl**
**Goerdeler Weg 72**
**D-7300 Esslingen (DE)**

(72) Erfinder : **Fichter, Karl**
**Goerdeler Weg 72**
**D-7300 Esslingen (DE)**

(74) Vertreter : **Reimold, Otto, Dr. Dipl.-Phys. et al**
**Patentanwälte Dipl.-Ing. R. Magenbauer Dipl.-Phys.**
**Dr. O. Reimold Hölderlinweg 58**
**D-7300 Esslingen (DE)**

EP 0 185 969 B1

## Beschreibung

Die Erfindung betrifft ein auf ein Kochgefäß wie Bratpfanne oder Kochtopf auflegbares, zum Filtern der vom Koch- oder Bratgut hochsteigenden Dämpfe od. dgl. zu verwendendes Gerät, das einen, eine Abzugsöffnung umschließenden Rahmen, von dem ein Handgriff absteht, aufweist, an dem die beiden Enden eines sich über die Abzugsöffnung erstreckenden Auflagestabes zum Auflegen eines Filtertuches und eine schwenkbare Halteeinrichtung zum Halten des Filtertuches von oben her befestigt sind.

Bei einem aus der US-A-25 87 773 bekannten Gerät dieser Art wird der Rahmen von einer im Querschnitt L-förmigen Profilleiste gebildet, so daß ein zur Abzugsöffnung hin vorstehender Auflagering und ein von dessen Außenseite hochstehender Umfangsring vorhanden ist. Das beispielsweise aus Papier bestehende Filtertuch besitzt einen dem Umfangsring entsprechenden Zuschnitt, so daß es in den Rahmen eingelegt werden kann und dabei auf dem Aufnahmering sowie auf dem Auflagestab aufliegt. Als Halteeinrichtung dient ein gelenkig außen am Rahmen angebrachter Metallring, der im nach unten geschwenkten Zustand von oben her in den Rahmen eingetaucht ist und ringsum auf dessen Auflagering bzw. auf dem dazwischengelegten Filtertuch aufliegt. Dieses hält die beim Kochen oder Braten entstehenden Fetttröpfchen oder sonstige in dem hochsteigenden Dampf enthaltenen Partikel zurück, so daß die Umgebung des Herdes nicht verschmutzt. Nach Gebrauch wird das Filtertuch weggeworfen.

Das bekannte Gerät weist verschiedene Nachteile auf :

Wegen der Verwendung eines L-förmigen Profilstabes für den Rahmen und der scharnierartigen Befestigung der Halteeinrichtung ist seine Herstellung verhältnismäßig aufwendig.

Ferner können nur speziell zu diesem Zweck bestimmte Filtertücher benutzt werden, die genau in den Rahmen passen und eine gewisse Stabilität besitzen, damit sie nicht durchhängen und randseitig vom Auflagering abrutschen. Die Benutzung des Gerätes ist deshalb mit nicht unerheblichen laufenden Kosten verbunden, da ja die Filtertücher nach einmaligem Gebrauch weggeworfen werden. Werden diese Filtertücher in den Geschäften nicht oder nicht mehr angeboten, wird das Gerät sogar unnütz.

Außerdem ist das zwischen dem Auflagering und dem Umfangsring vorhandene Eck sowie das Gelenk der Halteeinrichtung nur schwer zu reinigen, so daß sich vor allem an diesen Stellen bald eine unhygienische Fettschicht ergibt.

Die Aufgabe der vorliegenden Erfindung besteht deshalb darin, ein Gerät der eingangs genannten Art zu schaffen, das in der Herstellung und in der Anwendung billiger ist und einfacher gereinigt werden kann.

Diese Aufgabe wird erfindungsgemäß dadurch gelöst, daß der Rahmen aus einem gebogenen Metalldraht besteht und die Halteeinrichtung von mindestens einem nur mit einem Ende starr am Drahtrahmen oder am Handgriff befestigten, eigenelastischen Klemmstab gebildet wird, der sich von seinem befestigten Ende ausgehend bis über die Mitte der Abzugsöffnung hinaus erstreckt und federnd auf dem Auflagestab aufliegt, wobei das Filtertuch bei entgegen seiner Eigenelastizität hochgebogenem Klemmstab zwischen diesen und den Auflagestab einsteckbar ist.

Der aus Draht gebogene Rahmen ist nicht nur billig herzustellen und einfach zu reinigen, sondern bietet auch die Möglichkeit der Verwendung eines praktisch beliebig großen Filtertuches, da dieses nicht auf die Rahmengestalt abgestimmt, sondern über den Rahmen überstehen kann. Man kann also auch die üblichen, von einer Rolle abreißbaren Papier-Haushalttücher oder auch Servietten usw. benutzen, die überall erhältlich sind. Da man die Tücher seitlich über den Rahmen überstehen lassen kann, können sie aus verhältnismäßig dünnem Material sein, ohne daß ein Nach-innen-Rutschen befürchtet werden muß. Es versteht sich, daß man auch Stofftücher wie Geschirrtücher oder für Gasherde feuerfeste Tücher verwenden kann.

Ferner entfällt ein Gelenk für die Halteeinrichtung, da der mindestens eine Klemmstab starr angebracht ist, was sehr einfach durch Anschweißen erfolgen kann, wobei die Schwenkbarkeit durch die Eigenelastizität des Klemmstabes erreicht wird. Der elastisch gegen das Filtertuch drückende Klemmstab hält das Filtertuch sicher fest, so daß dies von den vom Koch- oder Bratgut hochsteigenden Dämpfen nicht nach oben abgehoben werden kann.

Zweckmäßigerweise sind zwei Auflagestäbe vorhanden, die mit Abstand zueinander verlaufen. Hierdurch erhält man eine verbesserte Abstützung des Filtertuches nach unten hin. Außerdem kann man das Gerät mittels der beiden Auflagestäbe auf ein gegenüber dem Rahmen kleineres Kochgefäß legen, was bei dem Gerät nach der US-A-25 87 773 nicht der Fall ist.

Eine weitere zweckmäßige Maßnahme besteht darin, daß auch zwei Klemmstäbe vorhanden sind, die mit Abstand zueinander verlaufen. Hiermit wird ein großflächigeres Niederhalten des Filtertuches erreicht.

Entlang der Oberseite jedes Auflagestabes kann sich parallel zu diesem ein Klemmstab erstrecken. Der mindestens eine Klemmstab kann jedoch auch gekreuzt zu dem mindestens einen Auflagestab verlaufen.

Eine besonders einfache Handhabung ergibt sich, wenn das freie Ende des mindestens einen Klemmstabes dem Handgriff zugewandt ist. Man kann dann mit der einen Hand das Gerät am Handgriff halten und mit der anderen Hand von der Handgriffseite her das Filtertuch einfügen oder herausziehen.

Ist das freie Ende jedes Klemmstabes nach oben abgebogen, kann dieser besonders leicht ergriffen werden, wenn er zum Einschieben eines Filtertuches hochgebogen wird.

Des weiteren kann zweckmäßigerweise vorgesehen sein, daß der mindestens eine Klemmstab nach Art einer Blattfeder ausgebildet ist.

Eine hinsichtlich der billigen Fertigung günstige Maßnahme besteht darin, daß der mindestens eine Auflagestab eine den Handgriff bildende Verlängerung besitzen kann. In einem solchen Falle kann man auch den Klemmstab am Handgriff befestigen, wobei man allerdings einen sich vom Benutzer weg erstreckenden Klemmstab erhält.

Vorteilhaft ist es des weiteren, daß der Drahtrahmen sechseckig ist. Ein solcher Rahmen kann auf Kochgefäße unterschiedlichen Durchmessers aufgelegt werden.

Des weiteren kann es günstig sein, daß das Gerät einen auf den Rahmen von dessen Oberseite her auflegbaren, die Abzugsöffnung freilassenden Niederhaltering enthält, der über den Rahmenumfang greift. Ein solcher, lösbar aufgesetzter Niederhaltering hält den Filtertuch-Umfangsbereich nach unten, so daß die hochsteigenden Dämpfe den Filtertuchrand nicht hochheben können und eine umfangsseitige Abdichtung erhalten wird. Dabei wird der über den Rahmen überstehende Filtertuchbereich von dem Niederhaltering sozusagen nach unten gestülpt. Allerdings werden durch den Niederhaltering die Gestehungskosten vergrößert. Außerdem erhöht er den Reinigungsaufwand. Deshalb wird man von dieser Möglichkeit nur selten Gebrauch machen, beispielsweise wenn es sich um Kochgefäße mit sehr großem Durchmesser handelt.

Ausführungsbeispiele der Erfindung werden nun anhand der Zeichnung im einzelnen beschrieben. Es zeigen :

Fig. 1 ein erstes Ausführungsbeispiel des erfindungsgemäßen Gerätes in Draufsicht von oben,

Fig. 2 das Gerät nach Fig. 1 im Schnitt gemäß der Schnittlinie II-II in Fig. 1,

Fig. 3 eine der Fig. 2 entsprechende Schnittdarstellung bei zum Einführen eines Filtertuches hochgeschwenkten Klemmstäben,

Fig. 4 eine der Fig. 1 entsprechende Draufsicht eines zweiten Ausführungsbeispiels des erfindungsgemäßen Gerätes und

Fig. 5 das Gerät nach Fig. 4 im Schnitt gemäß der Schnittlinie V-V in Fig. 4, wobei außerdem noch ein Kochgefäß eingezeichnet ist.

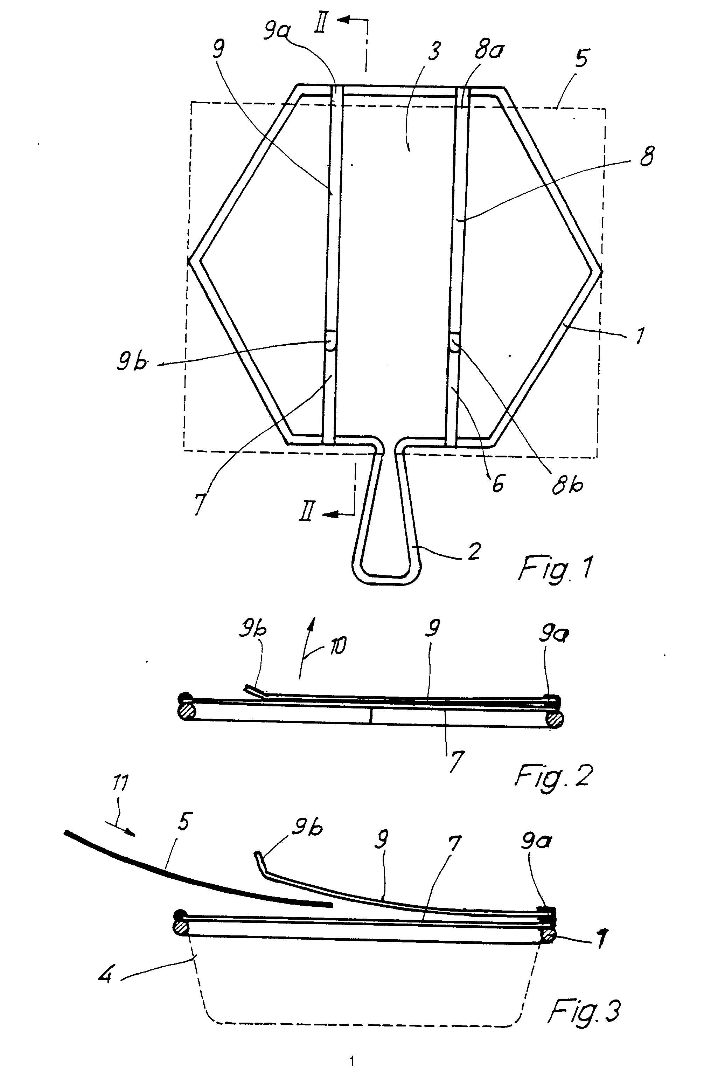

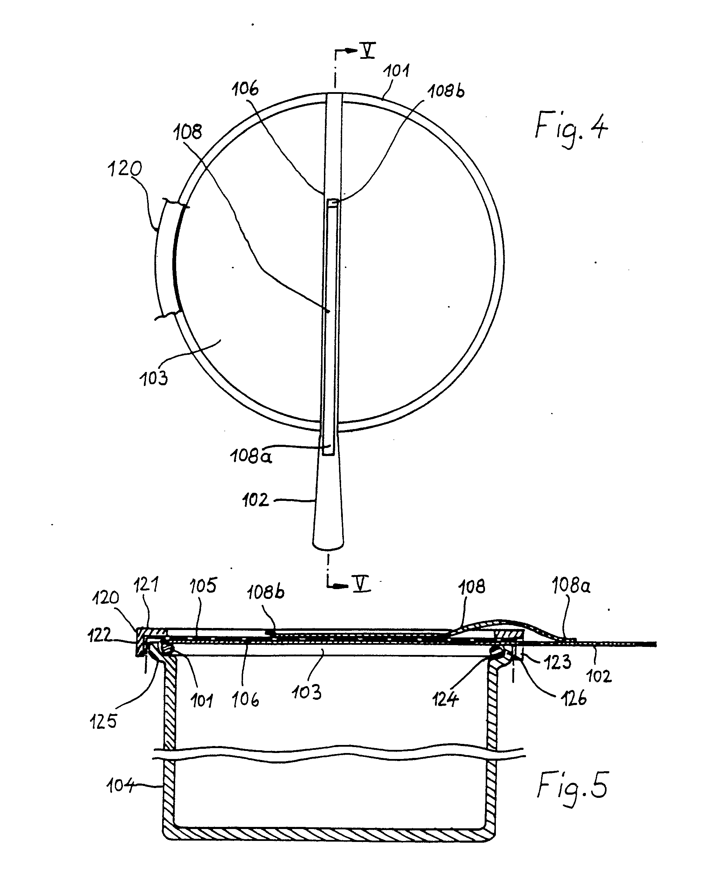

Zunächst wird das Ausführungsbeispiel gemäß den Figuren 1 bis 3 erläutert. Wie die anderen Ausführungsformen weist dieses Gerät eine flächige Gestalt auf und besitzt einen aus Metall bestehenden Rahmen mit einem von diesem nach außen hin abstehenden Handgriff 2 zum Ergreifen des Gerätes. Der Rahmen 1 wird von einem entsprechend gebogenen Metalldraht gebildet, an den der Handgriff 2 einstückig angebogen ist. Der Handgriff kann auch nicht einstückig angesetzt sein und hierbei zur Wärmeisolierung aus Holz oder Kunststoff bestehen. Eine weitere Handgriffvariante wird in Zusammenhang mit den Figuren 4 und 5 beschrieben werden.

Die Form des aus Fig. 1 ersichtlichen Rahmens ist sechseckig, wobei in der Mitte der Sechseckseite der Handgriff 2 angesetzt ist. Es versteht sich, daß der Rahmen auch eine andere, an den jeweiligen Anwendungsfall angepaßte Form, z. B. eine Kreisform gemäß Fig. 4, aufweisen kann.

Die vom Rahmen 1 umschlossene Fläche ist offen und bildet eine Abzugsöffnung 3. Der Rahmen 1 ist so bemessen, daß er auf ein Kochgefäß wie Bratpfanne oder Kochtopf auflegbar ist. In Fig. 3 ist gestrichelt eine Bratpfanne 4 angedeutet, auf deren Umfangswand das Gerät mit seinem Rahmen 1 aufgelegt ist. Um die vom Koch- oder Bratgut aus der Bratpfanne 4 hochsteigenden Dämpfe od. dgl. filtern und Fettspritzer zurückhalten zu können, wird ein Filtertuch 5 z. B. in Gestalt eines Papier-Haushalttuches verwendet, das mittels einer vom Rahmen 1 getragenen Halteeinrichtung an dem Gerät befestigt werden kann und in befestigtem Zustand die Abzugsöffnung 3 und somit die Kochgefäß-Oberseite abdeckt. Das Filtertuch 5 ist in Fig. 1 in seiner Gebrauchslage gestrichelt angedeutet. Seine Abmessungen sollten mindestens so groß wie die des Rahmens 1 sein.

Die Filtertuch-Halteeinrichtung ist bei diesem Ausführungsbeispiel und im Falle der Figuren 4 und 5 eine zweckmäßigerweise federnde, das Filtertuch klemmend haltende Klemmeinrichtung. Dabei enthält das Gerät gemäß den Figuren 1 bis 3 zwei Auflagestäbe 6, 7 und zwei Klemmstäbe 8, 9. Sowohl die beiden Auflagestäbe 6, 7 als auch die beiden Klemmstäbe 8, 9 verlaufen jeweils mit Abstand parallel zueinander. Die Auflagestäbe 6, 7 erstrecken sich ganz über die Abzugsöffnung 3 und sind mit ihren beiden Enden am Rahmen 1 befestigt. Die Klemmstäbe 8, 9 sind dagegen nur mit ihrem einen Ende 8a, 9a am Rahmen angebracht, während das andere Ende 8b, 9b frei ist. Die Befestigung der beiden Enden der Auflagestäbe 8, 9 und des einen Endes 8a, 9a der Klemmstäbe 8, 9 am Rahmen erfolgt durch Anschweißen, wobei in den Figuren 2 und 3 die Schweißstellen dick geschwärzt angedeutet sind. Die Auflagestäbe 8, 9 sind in Benutzungslage des Gerätes dem Kochgefäß 4 zugewandt. Ihre Enden sind an der Oberseite des Rahmens 1 befestigt. Oberhalb der fest angeordneten Auflagestäbe 8, 9, d. h. dem Kochgefäß abgewandt, erstrecken sich die Klemmstäbe 8, 9, die in Benutzungslage (Figuren 1 und 2) auf der Oberseite der Auflagestäbe 8, 9 aufliegen.

Alle Stäbe 6, 7, 8, 9 werden von einem bandförmigen Materialstück aus Metall gebildet. Die Klemmstäbe 8, 9 liegen federnd auf der Oberseite der Auflagestäbe 6, 7 auf, wozu man die Klemmstäbe nach Art von Blattfedern ausbilden kann. Die die Klemmstäbe 8, 9 bildenden Metallbänder sind dabei so elastisch, daß sie von Hand in Richtung gemäß Pfeil 10 von den Auflagestäben weg hochschwenkbar sind, wenn man sie an den freien Enden 8b, 9b von Hand ergreift. Fig. 3 zeigt die hochgeschwenkte Stellung der Klemmstäbe. Zum leichteren Ergreifen der freien Enden 8b, 9b bzw. zum leichteren Einfädeln oder Einschieben eines Filtertuches 5 zwischen die Auflagestäbe und die Klemmstäbe sind die freien Enden 8b, 9b jedes Klemmstabes von diesem abgebogen, und zwar in Richtung von den Auflagestäben weg.

Wie aus der Zeichnung ersichtlich, erstreckt sich entlang der Oberseite jedes Auflagestabes 6 bzw. 7 parallel zu diesem ein Klemmstab 8 bzw. 9. Bei dem Ausführungsbeispiel nach den Figuren 1 bis 3 sind also zwei sich jeweils aus einem Auflagestab und aus einem an dessen Oberseite entlang verlaufenden Klemmstab zusammensetzende, zueinander parallele Stabpaare 6, 8 und 7, 9 vorhanden. Diese Stabpaare erstrecken sich symmetrisch zu einer Durchmesserlinie der Abzugsöffnung 3, wobei ihr Abstand voneinander so gewählt wird, daß ein eingesetztes Filtertuch gut gehalten wird.

Die Klemmstäbe 8, 9 erstrecken sich bis über die Mitte der Abzugsöffnung 3 hinaus, wobei sie mit ihren freien Enden 8b, 9b im Bereich des Rahmens endigen können.

Die Handhabung des Gerätes geschieht wie folgt :

Zwischen jedem Auflagestab 6 bzw. 7 und dem an dessen Oberseite entlang verlaufenden Klemmstab 8 bzw. 9 ist ein vom freien Ende des jeweiligen Klemmstabes bis zum Befestigungsende der Klemmstäbe reichender Einsteckschlitz vorhanden. Durch Hochschwenken der Klemmstäbe 8, 9 in Richtung gemäß Pfeil 10 erhalten die Klemmstäbe einen solchen Abstand von den Auflagestäben, daß das zuvor bereitgestellte Filtertuch 5 mühelos über der Abzugsöffnung 3 in die beiden Einsteckschlitze eingeschoben werden kann (Pfeil 11), bis die Abzugsöffnung abgedeckt ist. Läßt man die freien Enden 8b, 9b der beiden Klemmstäbe anschließend los, drücken sie eigenelastisch von oben her gegen das auf den Auflagestäben aufliegende Filtertuch, so daß dieses festgeklemmt wird. Zum Erhalt dieser elastischen Kraft verlaufen die beiden Klemmstäbe 8, 9 mit Bezug auf die Auflagestäbe leicht geneigt (siehe Fig. 2), indem die Befestigungsenden 8a, 9a gegenüber den zugewandten Enden der Auflagestäbe etwas hochgesetzt sind und die entgegengesetzten Endbereiche der Klemmstäbe unter Vorspannung auf den Auflagestäben aufliegen. Der Verlauf der Klemmstäbe 8, 9 ist leicht gekrümmt. Da bereits eine geringe elastische Kraft zum Halten des Filtertuches ausreicht, ist diese Krümmung kaum erkenntlich. Ist das Filtertuch in dieser Weise festgelegt, wird das Gerät auf das Kochgefäß 4 aufgelegt. Das Filtertuch bildet dann während des Kochens oder Bratens sozusagen einen wasserdampfdurchlässigen Deckel. Ist der Kochvorgang beendet, wird das Filtertuch in Richtung entgegen Pfeil 11 einfach aus den Einsteckschlitzen herausgezogen und weggeworfen.

Die beiden Stabpaare 6, 8 und 7, 9 verlaufen bei dem beschriebenen Ausführungsbeispiel zwischen zwei entgegengesetzten Sechseckseiten, wobei die Anordnung ferner so getroffen sein, daß sie beiderseits des Handgriffs 2 angeordnet sind. Des weiteren sind die freien Enden 8b, 9b der Klemmstäbe dem Handgriff 2 zugewandt, so daß sich in Zusammenhang mit dem weiteren Merkmal, daß sich die Klemmstäbe 8, 9 parallel zum Handgriff 2 erstrecken, ein handhabungsmäßig zweckmäßiges Einführen und Entnehmen des Filtertuches an der Handgriffseite ergibt.

Das Gerät läßt sich in verschiedener Weise variieren. So kann, wie schon erwähnt, die Rahmenform und die Ausgestaltung des Handgriffes verändert werden. Ferner kann beispielsweise je nach Gerätegröße, d. h. je nach der Größe der Abzugsöffnung 3, eine Anzahl von Auflagestäben oder Klemmstäben vorhanden sein. Außerdem muß der Verlauf der Stäbe nicht zwingend parallel zum Handgriff sein. Ferner müssen die Auflagestäbe und die Klemmstäbe nicht unbedingt übereinanderliegen, sie können prinzipiell auch gekreuzt zueinander verlaufen. Es versteht sich des weiteren, daß man anstelle eines Filtertuches auch mehrere aufeinandergelegte Filtertücher verwenden kann.

Nunmehr wird die Ausführungsform gemäß den Figuren 4 und 5 beschrieben :

Dieses Gerät weist einen kreisförmigen, ebenfalls aus Metalldraht gebogenen Rahmen 101 auf, der die Abzugsöffnung 103 umschließt. Entlang eines Durchmessers des Rahmens 101 erstreckt sich ein einziger Auflagestab 106, auf dem ein Klemmstab 108 angebracht ist. Dieser Klemmstab 108 ist mit seinem dem Handgriff 102 zugewandten Ende 108a starr befestigt und an seinem dem Handgriff 102 entgegengesetzten Ende 108b, das zum leichteren Ergreifen etwas hochgebogen ist, frei. Wiederum drückt das freie Ende 108b elastisch gegen den Auflagestab 106. Dabei ist die Anordnung so getroffen, daß das befestigte Ende 108a des Klemmstabes 108 über den eigentlichen Rahmen 101 vorragt und am Handgriff 102 befestigt ist. Dies bringt den Vorteil mit sich, daß das befestigte Klemmstabende 108a ein vollständiges Abdecken der Abzugsöffnung 103 nicht behindert. Das in Fig. 5 gestrichelt angedeutete Filtertuch 105 kann bis über den Umfang der Abzugsöffnung 103 hinaus zwischen den Auflagestab 106 und den Klemmstab 108 eingeschoben werden. Diese Maßnahme kann auch bei mehreren Auflagestäben und Klemmstäben vorgesehen werden, wenn man den Handgriff entsprechend breit macht.

Ferner besitzt dieses Ausführungsbeispiel einen besonders einfach herzustellenden Handgriff 102. Dieser wird nämlich von einer Verlängerung des Auflagestabes 106 gebildet. Der Handgriff 102 kann also einstückig mit dem Auflagestab 106 sein, der auf der Oberseite des Rahmens 101 befestigt ist. Es versteht sich, daß man das Handgriffende des Auflagestabes 106 handgerecht verbreitern kann oder daß man an ihm auch noch einen Holz- oder Kunststoffgriff anbringen kann.

Der sonstige Aufbau des Geräts nach den Figuren 4 und 5 sowie seine Wirkungsweise ist dem Ausführungsbeispiel gemäß den Figuren 1 bis 3 entsprechend. Es versteht sich, daß man die zum einen anhand der Figuren 1 bis 3 und zum anderen anhand der Figuren 4 und 5 beschriebenen Maßnahmen in geeigneter Weise auch miteinander kombinieren kann.

Aus den Figuren 4 und 5 geht noch eine weitere Maßnahme hervor, die man auch im Falle der Figuren 1 bis 3 treffen könnte :

Diesem Gerät ist ein auf den Rahmen 101 von dessen Oberseite her auflegbarer, die Abzugsöffnung 103 freilassender Niederhaltering 120 zugeordnet, der sich über den gesamten Umfang des Rahmens 101 erstreckt. Bei dem Niederhaltering 120 handelt es sich um ein gesondertes Teil, das weggenommen werden kann. Er besitzt eine oberhalb dem Rahmen 101 verlaufende Auflagepartie 121 sowie eine über den Rahmenumfang greifende Ringpartie 122, so daß sich ein im wesentlichen L-förmiger Querschnitt ergibt. Die den Rahmenumfang umgreifende Ringpartie 122 besitzt eine Ausnehmung 123, durch die der Handgriff 102 hindurchtreten kann. Ist das Filtertuch 105 unter den Klemmstab 108 gelegt, wird der Niederhaltering 120 über den Rahmen 101 gestülpt, so daß der Rand des Filtertuches 105 von der Niederhaltepartie 121 nach unten hin festgehalten wird. Somit kann der Randbereich des Filtertuches 105 vom im Kochgefäß herrschenden Dampfdruck nicht hochgehoben werden. Die Ringpartie 122 verhindert ein Verrutschen des Niederhalterings 120 in der Geräteebene. Ist das Filtertuch 105 größer als der Rahmen 101, wird der Filtertuchrand von der Ringpartie 122 nach unten hin abgebogen, wie dies in Fig. 5 ebenfalls gestrichelt angedeutet ist. All dies ergibt einen sicheren Abschluß der Kochgefäß-Oberseite.

Zur Halterung des Gerätes an der Kochgefäß-Oberseite kann folgendes vorgesehen sein :

Ist der Rahmen wie beim Ausführungsbeispiel nach den Figuren 4 und 5 kreisrund, kann man an der Oberseite des Kochgefäßes 104 eine rechtwinkelig nach außen gerichtete Stufenfläche 124 anformen, deren Durchmesser dem Durchmesser des Rahmens 101 entspricht und auf die man den Rahmen 101 auflegen kann. Anschließend an die die Stufenfläche 124 bildende Kochgefäßpartie 125 kann man eine wieder nach oben gerichtete Randpartie 126 an das Kochgefäß 104 anformen, die nicht höher als der Rahmen 101 sein sollte. Die Randpartie 126 umfaßt den Rahmen 101. Da der Rahmen 101 rundum am Kochgefäß 104 aufliegt, ergibt sich auch an dieser Stelle eine gute Abdichtung des Gefäß-Innenraums nach außen hin.

Der Durchmesser des Niederhalterings 120 ist so bemessen, daß seine nach unten gerichtete Ringpartie 122 die Randpartie 126 des Kochgefäßes 104 übergreift.

Ist der Klemmstab wie der Klemmstab 108 am Handgriff befestigt und ist der Niederhaltering 120 vorgesehen, kann man dem Klemmstab eine gebogene Form geben, so daß er den Niederhaltering 120 übergreift.

## Patentansprüche

1. Auf ein Kochgefäß wie Bratpfanne (4) oder Kochtopf (104) auflegbares, zum Filtern der vom Koch- oder Bratgut hochsteigenden Dämpfe od. dgl. zu verwendendes Gerät, das einen, eine Abzugsöffnung umschließenden Rahmen (1, 101), von dem ein Handgriff (2, 102) absteht, aufweist, an dem die beiden Enden eines sich über die Abzugsöffnung erstreckenden Auflagestabes (6, 7, 106) zum Auflegen eines Filtertuches (5) und eine schwenkbare Halteeinrichtung zum Halten des Filtertuches von oben her befestigt sind, dadurch gekennzeichnet, daß der Rahmen (1 ; 101) aus einem gebogenen Metalldraht besteht und die Halteeinrichtung von mindestens einem nur mit einem Ende (8a, 9a ; 108a) starr am Drahtrahmen (1 ; 101) oder am Handgriff (102) befestigten, eigenelastischen Klemmstab (8, 9 ; 108) gebildet wird, der sich von seinem befestigten Ende ausgehend bis über die Mitte der Abzugsöffnung (3 ; 103) hinaus erstreckt und federnd auf dem Auflagestab (6, 7 ; 106) aufliegt, wobei das Filtertuch bei entgegen seiner Eigenelastizität hochgebogenem Klemmstab zwischen diesen und den Auflagestab einsteckbar ist.

2. Gerät nach Anspruch 1, dadurch gekennzeichnet, daß zwei Auflagestäbe (6, 7) vorhanden sind, die mit Abstand zueinander verlaufen.

3. Gerät nach Anspruch 1 oder 2, dadurch gekennzeichnet, daß zwei Klemmstäbe (8, 9) vorhanden sind, die mit Abstand zueinander verlaufen.

4. Gerät nach einem der Ansprüche 1 bis 3, dadurch gekennzeichnet, daß sich entlang der Oberseite jedes Auflagestabes (6, 7 ; 106) parallel zu diesem ein Klemmstab (8, 9 ; 108) erstreckt.

5. Gerät nach einem der Ansprüche 1 bis 3, dadurch gekennzeichnet, daß der mindestens eine Klemmstab gekreuzt zu dem mindestens einen Auflagestab verläuft.

6. Gerät nach einem der Ansprüche 1 bis 5, dadurch gekennzeichnet, daß das freie Ende des mindestens einen Klemmstabes (8, 9) dem Handgriff (2) zugewandt ist.

7. Gerät nach einem der Ansprüche 1 bis 6, dadurch gekennzeichnet, daß der mindestens eine Klemmstab (8, 9 ; 108) nach Art einer Blattfeder ausgebildet ist.

8. Gerät nach einem der Ansprüche 1 bis 7, dadurch gekennzeichnet, daß das freie Ende (8b, 9b ; 108b) jedes Klemmstabes (8, 9 ; 108) nach oben abgebogen ist.

9. Gerät nach einem der Ansprüche 1 bis 8, dadurch gekennzeichnet, daß der mindestens eine Auflagestab (106) eine den Handgriff (102) bildende Verlängerung besitzt.

10. Gerät nach einem der Ansprüche 1 bis 9, dadurch gekennzeichnet, daß der Rahmen (1) sechseckig ist.

11. Gerät nach einem der Ansprüche 1 bis 10, dadurch gekennzeichnet, daß es einen auf den Rahmen (101) von dessen Oberseite her auflegbaren, die Abzugsöffnung (103) freilassenden Niederhaltering (120) enthält, der über den Rahmenumfang greift, wobei zweckmäßigerweise die den Rahmenumfang umgreifende Ringpartie (122) eine Ausnehmung (123) zum Durchtreten des Handgriffs (102) besitzt.

## Claims

1. A utensil which can be placed on a cooking vessel such as a frying pan (4) or saucepan (104) for the purpose of filtering the steam, etc. rising from the food being fried or cooked, this utensil having a frame (1, 101) enclosing an outlet and from which a handle (2, 102) protrudes ; fastened to the frame from above are the two ends of a support bar (6, 7, 106) extending over the outlet and on which a filter cloth (5) is placed, and an adjustable retaining device to hold the filter cloth in place, characterized in that the frame (1; 101) is made of bent metal wire and the retaining device is formed of at least one naturally resilient clamping bar (8, 9 ; 108), fastened rigidly at only one end (8a, 9a ; 108a) to the wire frame (1 ; 101) or to the handle (102), extending from its secured end to beyond the centre of the outlet (3 ; 103) and resting resiliently on the support bar (6, 7 ; 106), so that it is possible to insert the filter cloth between the support bar and the clamping bar when the latter is bent upwards against its natural resilience.

2. Utensil as described in claim 1, characterized in that there are two support bars (6, 7), spaced apart from one another.

3. Utensil as described in claims 1 or 2, characterized in that there are two clamping bars (8, 9), spaced apart from one another.

4. Utensil as described in any of claims 1 to 3, characterized in that along the top of each support bar (6, 7 ; 106), a clamping bar (8, 9 ; 108) extends parallel to it.

5. Utensil as described in any of claims 1 to 3, characterized in that at least one clamping bar crosses over at least one support bar.

6. Utensil as described in any of claims 1 to 5, characterized in that the free end of at least one clamping bar (8, 9) faces towards the handle (2).

7. Utensil as described in any of claims 1 to 6, characterized in that at least one clamping bar (8, 9 ; 108) is designed in the manner of a leaf spring.

8. Utensil as described in any of claims 1 to 7, characterized in that the free end (8b, 9b ; 108b) of each clamping bar (8, 9 ; 108) is bent upwards.

9. Utensil as described in any of claims 1 to 8, characterized in that at least one support bar (106) has an extension forming the handle (102).

10. Utensil as described in any of claims 1 to 9, characterized in that the frame (1) is hexagonal.

11. Utensil as described in any of claims 1 to 10, characterized in that it contains a retaining ring (120) which leaves the outlet (103) clear and can be placed on the frame (101) from above, this ring extending over the perimeter of the frame, with that section (122) of the ring engaging with the frame perimeter advantageously possessing a recess (123) for passage of the handle (102).

## Revendications

1. Ustensile à poser sur un appareil de cuisson comme une poêle à frire (4) ou une casserole (104) et à utiliser pour filtrer les vapeurs ou similaires émises par les denrées à cuire ou à frire, comportant un cadre (1, 101) qui entoure une ouverture, d'où part un manche (2, 102) et sur lequel sont fixées les deux extrémités d'une tige d'appui (6, 7, 106) s'étendant sur l'ouverture pour y poser un filtre (5), et comportant un dispositif de retenue pivotant pour maintenir ce filtre depuis le haut, caractérisé par le fait que le cadre (1 ; 101) se compose d'un fil métallique recourbé et que le dispositif de retenue est constitué par au moins une tige de serrage (8, 9 ; 108) à élasticité propre qui est fixée rigidement par l'une seulement (8a, 9a ; 108a) de ses extrémités au cadre en fil (1 ; 101) ou au manche (102), qui s'étend à partir de son extrémité fixe au-delà du milieu de l'ouverture (3 ; 103) et qui s'appuie élastiquement sur la tige d'appui (6, 7 ; 106), le filtre pouvant être enfoncé entre la tige de serrage, lorsqu'elle est recourbée vers le haut à l'encontre de son élasticité propre, et la tige d'appui.

2. Ustensile selon la revendication 1, caractérisé par le fait qu'il comporte deux tiges d'appui (6, 7) s'étendant à distance l'une de l'autre.

3. Ustensile selon la revendication 1 ou 2, caractérisé par le fait qu'il comprend deux tiges de serrage (8, 9) s'étendant à distance l'une de l'autre.

4. Ustensile selon l'une des revendications 1 à 3, caractérisé par le fait qu'une tige de serrage (8, 9 ; 108) s'étend le long de la face supérieure de chaque tige d'appui (6, 7 ; 106) parallèlement à cette dernière.

5. Ustensile selon l'une des revendications 1 à 3, caractérisé par le fait qu'au moins l'une des tiges de serrage s'étend en croisant au moins l'une des tiges d'appui.

6. Ustensile selon l'une des revendications 1 à 5, caractérisé par le fait que l'extrémité libre de l'une au moins des tiges de serrage (8, 9) est tournée vers le manche (2).

7. Ustensile selon l'une des revendications 1 à 6, caractérisé par le fait que l'une au moins des tiges de serrage (8, 9 ; 108) est réalisée à la manière d'une lame de ressort.

8. Ustensile selon l'une des revendications 1 à 7, caractérisé par le fait que l'extrémité libre (8b, 9b ; 108b) de chaque tige de serrage (8, 9 ; 108) est recourbée vers le haut.

9. Ustensile selon l'une des revendications 1 à 8, caractérisé par le fait que l'une au moins des tiges d'appui (106) comporte un prolongement constituant un manche (102).

10. Ustensile selon l'une des revendications 1 à 9, caractérisé par le fait que le cadre (1) est hexagonal.

11. Ustensile selon l'une des revendications 1 à 10, caractérisé par le fait qu'il comprend un anneau de retenue (120) qui peut être déposé sur le cadre (101) à partir de sa face supérieure, qui laisse libre l'ouverture (103) et qui enserre la périphérie du cadre, la partie (122) de cet anneau qui enserre la périphérie du cadre comportant avantageusement un évidement (123) pour laisser passer le manche (102).

0 185 969

Fig. 1

Fig. 2

Fig. 3

Fig.4

Fig.5